Europäisches Patentamt

European Patent Office

Office européen des brevets

(11) Publication number : **0 473 556 A2**

# EUROPEAN PATENT APPLICATION

(21) Application number : **91830344.7**

(22) Date of filing : **02.08.91**

(51) Int. Cl.$^5$ : **F16F 15/30,** F16H 33/02, B60T 13/46

(30) Priority : **07.08.90 IT 1202090**

(43) Date of publication of application :
**04.03.92 Bulletin 92/10**

(84) Designated Contracting States :
**AT BE CH DE DK ES FR GB GR LI LU NL SE**

(71) Applicant : **GENTILI OLEODINAMICA S.r.l.**
**Via Tristano e Isotta, 1**
**I-47037 Rimini,(Forl ) (IT)**

(72) Inventor : **Benito, Gentili**
**Via Tristano e Isotta, 3**
**I-47037 Rimini, (FO) (IT)**

(74) Representative : **Lanzoni, Luciano**
**c/o BUGNION S.p.A. Via Cairoli, 107**
**I-47037 Rimini (Forli) (IT)**

(54) **A device for enhancing accumulation and retention of kinetic energy in the flywheels of engines and motors generally, and for improving the successive utilization of such energy.**

(57)   In a device designed to enhance the accumulation and retention of kinetic energy by the flywheels of engines and motors generally, and to optimize the successive use of such energy, the flywheel (2) turns in an airtight casing (4) connected to a vacuum pump (6) and maintained at negative pressure during operation in such a way that the resistance offered by air to the rotation of the flywheel is minimized.

EP 0 473 556 A2

Fig.1

The present invention relates to a device designed to enhance the accumulation and retention of energy in the flywheels of engines and motors generally, and to improve the successive utilization of such energy.

The operating cycle of many engines and motors is such that the output of energy cannot be maintained steady and continuous.

The system most widely adopted to obtain a regular cycle in enines/motors and machines in general is that of keying a heavy disk or flywheel onto one of the rotating shafts which, through the effect of its inertia, tends to render movement uniform and to maintain a constant number of revolutions per unit of time.

In power machines which operate intermittently and with especially short active periods, the flywheel serves to accumulate energy in the inactive period and return this same energy to the machine in the short active period.

Accordingly, the object of the present invention, which relate to the flywheels more especially of automotive engines and motors, internal combustion and electric alike, is to obtain a saving in energy and an increase in power output quantifiable at between 30 and 40%.

It will be remembered at this point that, according to the law of inertia or Newton's first law, a body will remain motionless or continue moving uniformly in a traight line until subject to an external force causing it to alter its current state.

Bodies rotating about an axis are also subject to the force of inertia, and likewise would persist in their movement at a constant angular velocity were it not for the decelerating effects of friction and the resistance of air.

The present invention affords the advantage of totally eliminating air resistance, thanks to an original engineering solution whereby the flywheel is installed in a specially evacuated chamber.

Moreover, rather than coupling the flywheel rigidly and permanently with the relative engine or motor in conventional manner, a progressively engaging electromagnetic clutch is adopted which allows of coupling the flywheel temporarily, thereby avoiding dissipation of the energy stored in the wheel and enhancing the performance of the engine or motor. In effect, a permanent coupling between flywheel and engine or motor prolongs both acceleration and deceleration, slowing the response of the engine or motor and bringing significant penalties besides in terms of energy consumption.

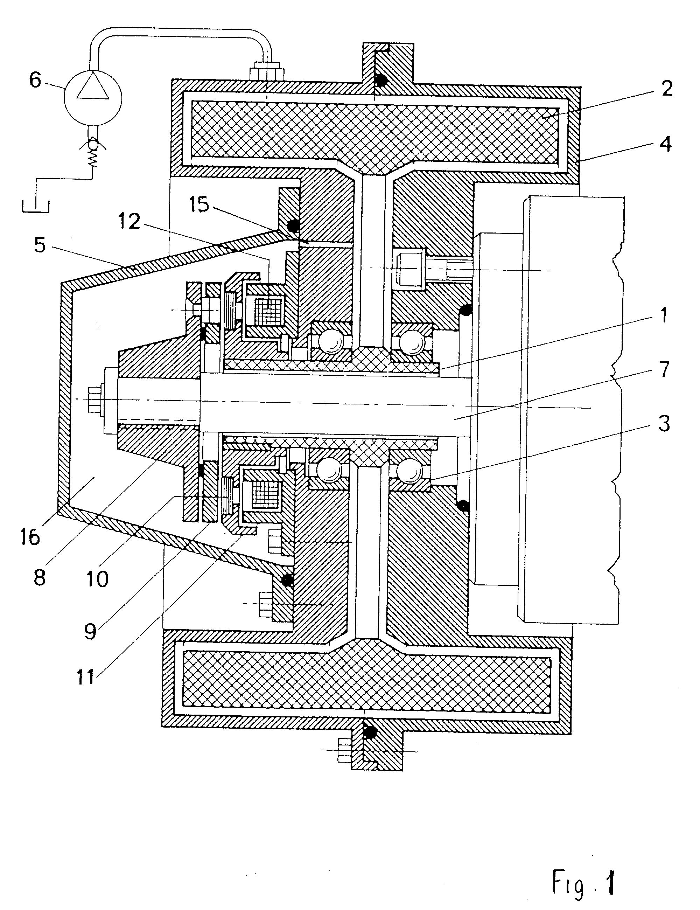

The invention will now be described in detail by way of example with the aid of the accompanying drawing, Fig. 1,which shows the device in a longitudinal section taken through the axis of rotation of the flywheel and the relative electromagnetic clutch. The device is illustrated is operated by means of a microswitch, fitted directly or otherwise connected to an accelerator pedal and designed to energgise the electromagnetic clutch by way of an electronic timer, suitably programmed according to the overall duration of the progressive engagement ot the clutch, and to the gradient of the voltage supplied to the magnets.

In the drawing, it will be seen that the shaft 1 of the flywheel 2 is supported by a pair of bearings 3 or other equivalent means internally of an airtight casing 4 connected by way of through holes with an adjacent compartment 16 formed within a cover 5 and containing the flywheel and crank- or power-shaft coupling.

The space encompassed by the flywheel casing 4 and the compartment 16 encompassed by the coveer 5 are interconnunicating and airtight, and connected to a vacuum pump 6 of conventional embodiment; besides eliminating the resistance of air to the flywheel 2 and its coupling with the engine or motor, thereby prplonging the life of the clutch and enhancing its performance, the resulting negatively pressurized chamber can be exploited further to operate a brake servo, especially in electric vehicles.

The crank or power shaft 7 rotates internally of and coaxial with the flyewheel shaft 1, which is of hollow embodiment, more exactly, the shaft 7 is connected rigidly by way a keyed coupling disk 8 to the clutch plate 9, which, drawn by the magnets 12 into translational movement along the axis of rotation against the action of a relative spring, enters into contact with a friction ring 10 mounted to an element 11 keyed in its turn to the flywheel shaft 1.

In the embodiment shown by way of example, a degree of clearance is left between the flywheel shaft 1 and the crank- or power shaft 7, thus affording the twofold advantage of a reduction in power losses through friction between the coaxial shafts 1 and 7 and the creation of a further connecting channel between the casing 4 and the compartment 16 beneath the cover 5, in addition to that provided by the holes 15.

Clearly, the type of clutch assembly illustrated is conventional and could well be replaced, wighout prejudice to the scope of the invention, by other types of clutch conventional or otherwise but in any event the possible applications of the device and the advantages derivable, one need look no further than the vehicles employed prevalently in urban transport (cars, motor cycles, vans, buses, etc.,); whether propelled by internal combustion engine or by electric motor, any such vehicle is penalized currently by notable losses of energy attributable to the frequent stopping and slowing down which characterizes any urban travel.

The example of the device described and illustrated implies no limitation, its practical implementation admitting of modifications and variations that could consist simply in a partial rather than full adoption of the proposed expedients.

In effect, even if only the decelerating influence of air on the flywheel is eliminated, by evacuating the space around a flywheel associated rigidly with its engine or motor, this nonetheless can achieve a significant reduction of masses in relation to a conventional flywheel of comparable specifications, and a consequent saving in energy.

## Claims

1) A device for enhancing accumulation and retention of kinetic energy in the flywheels of engines and motors generally, and for improving the successive utilization of such energy
characterized
in that the flywheel (2) is rotatable internally of an airtight casing (4) connected to and maintained at negative pressure by a vacuum pump (6) in such a way as to reduce the decelerating effect of air on the rotation of the flywheel (2).

2) A device as in claim 1, wherein the casing (4) is associated with an electric motor and serves additionally to operate a vacuum brake servo.

3) A device as in claim 1, wherein the flywheel (2) is associated with the crankshaft or power shaft (7) of the engine or motor by way of a non-permanent and progressively engaging electromagnetic clutch coupling device that is governed by electrical control means and operated in such a way that the flywheel (2) and the shaft (7) can be made either to rotate as one, thereby enabling the accumulation and utilization of kinetic energy, or released one from the other, thereby allowing the flywheel to rotate freely within the casing (4) and retain the kinetic energy accumulated.

4) A device as in claim 3, wherein electrical control means comprise:
- a microswitch operated by an accelerator pedal associated with the engine or motor;
- an electrical circuit operated by the microswitch and serving to energize the electromagnet clutch, and including an electronic timer of which the setting is selected in respect of the duration of the progressive engagement of the clutch coupling device and the gradient of the voltage supplied to the relative electromagnets.

5) A device as in claim 3, wherein the clutch coupling device is housed within an airtight compartment (16) interconnected by way of holes (15) with the casing (4) in such a way that the clutch can also operate in a negatively pressurized environment.

Fig. 1